# EUROPEAN PATENT APPLICATION

(11) **EP 4 679 843 A1**
(43) Date of publication of application: **14.01.2026**
(21) Application number: 24766417.0
(22) Date of filing: 04.03.2024
(51) Int. Cl.: H04N 21/466

(54) **VIDEO PROCESSING METHOD, APPARATUS AND DEVICE, AND STORAGE MEDIUM**

(30) Priority: 08.03.2023 CN 202310257241
(71) Applicant: Beijing Zitiao Network Technology Co., Ltd., Beijing 100190 (CN)
(72) Inventor: CHE, Wanli, Beijing 100028 (CN); XU, Ye, Beijing 100028 (CN); WANG, Zuxin, Beijing 100028 (CN)
(74) Representative: Grünecker Patent- und Rechtsanwälte PartG mbB
(86) International application number: PCT/CN2024/079989
(87) International publication number: WO 2024/183702

(57) **Abstract**

The disclosure provides a method, an apparatus, a device, and a storage medium for video processing. The method includes: firstly, in response to a preset trigger operation on a first playback page of a first video, obtaining a related recommended video stream of the first video, and jumping from the first playback page to a second playback page of the first video; then, in response to a preset first direction slide operation on the second playback page, pulling up from bottom of the second playback page and presenting a first target recommended video in the related recommended video stream. It can be seen that the embodiments of the present disclosure can jump from the first playback page of the first video to the second playback page, and a presentation of a recommended video in the recommended video stream is triggered on the second playback page based on the preset first direction slide operation, which is convenient for a user to quickly and efficiently browse a relevant recommended video on a playback page of a first video, thereby enriching video-based interaction functions, and improving the video playback experience of a user.

## Description

**This** application claims priority to Chinese Patent Application No. 2023102572413, filed with the Chinese Patent Office on March 8, 2023, and entitled "METHOD, APPARATUS, DEVICE AND STORAGE MEDIUM FOR VIDEO PROCESSING", which is incorporated herein by reference in its entirety.

### FIELD

The present disclosure relates to the field of data processing, and in particular, to a method, an apparatus, a device, and a storage medium for video processing.

### BACKGROUND

With continuous development of video processing technologies, people's requirements for video-related functions are becoming more and more diversified, therefore, how to enrich video-related functions and satisfy more requirements of users to improve the user experience is a technical problem to be solved urgently at present.

### SUMMARY

The present disclosure provides a method, apparatus, device, and a storage medium for video processing, which can enrich video-based interaction functions and improve user experience.

According to a first aspect, the present disclosure provides a method for video processing, including:

in response to a preset trigger operation on a first playback page of a first video, obtaining a related recommended video stream of the first video, and jumping from the first playback page to a second playback page of the first video; where the second playback page presents complete topic content of the first video; and

in response to a preset first direction slide operation on the second playback page, pulling up from bottom of the second playback page and presenting a first target recommended video in the related recommended video stream; where, the first target recommended video is determined based on sliding information corresponding to the preset first direction slide operation.

In an optional implementation, the method further includes:

in response to a preset second direction slide operation on the second playback page, determining, based on sliding information corresponding to the preset second direction slide operation, a second target recommended video from recommended videos in the related recommended video stream previous to a currently played recommended video, and presenting the second target recommended video.

In an optional implementation, the method further includes:

in response to a trigger operation for a third target recommended video presented on the second playback page, jumping from the second playback page to a third playback page, and playing the third target recommended video on the third playback page based on the related recommended video stream.

In an optional implementation, the method further includes:

in response to a preset video switching operation on the third playback page, determining a target switching recommended video based on the related recommended video stream, and playing the target switching recommended video on the third playback page.

In an optional implementation, the method further includes:
in response to a preset return operation on the third playback page, determining a video being played on the third playback page as a target return recommended video, and jumping from the third playback page to the second playback page; and
synchronously playing the target return recommended video on the second playback page based on the related recommended video stream.

In an optional implementation, at least one recommendation control corresponding to the first video is provided on the second playback page, and there is a correspondence between the recommendation control and a recommendation dimension corresponding to the first video. The method further includes:
in response to a trigger operation for a target recommendation control in the at least one recommendation control, updating the related recommended video stream of the first video to be a related recommended video stream of the target recommendation control; where the related recommended video stream of the target recommendation control is determined based on a recommendation dimension corresponding to the target recommendation control.

In an optional implementation, the recommended dimension corresponding to the first video includes a content label dimension of the first video and/or a publisher dimension of the first video.

In an optional implementation, the sliding information includes the sliding information includes at least one of a sliding speed and a sliding distance, and pulling up from the bottom of the second playback page and presenting a first target recommended video in the related recommended video stream in response to a preset first direction slide operation on the second playback page includes:
in response to a preset first direction slide operation on the second playback page, obtaining sliding information corresponding to the preset first direction slide operation; and
determining the first target recommended video from the related recommended video stream based on the sliding information, and pulling up from the bottom of the second playback page and presenting the first target recommended video.

According to a second aspect, the present disclosure provides an apparatus for video processing. The apparatus includes:
a first jumping module configured to obtain, in response to a preset trigger operation on a first playback page of a first video, a related recommended video stream of the first video, and jump from the first playback page to a second playback page of the first video; wherein the second playback page presents complete topic content of the first video; and
a first presenting module configured to pull up from bottom of the second playback page and present a first target recommended video in the related recommended video stream, in response to a preset first direction slide operation on the second playback page; wherein the first target recommended video is determined based on sliding information corresponding to the preset first direction slide operation.

According to a third aspect, the present disclosure provides a computer readable storage medium. The computer readable storage medium stores an instruction, and when the instruction runs on a terminal device, the terminal device is enabled to implement the foregoing method.

According to a fourth aspect, the present disclosure provides a video processing device, including: a memory, a processor, and a computer program that is stored in the memory and runs on the processor, where when the processor executes the computer program, the foregoing method is implemented.

In a fifth aspect, the present disclosure provides a computer program product. The computer program product includes a computer program/instruction. When the computer program/instruction is executed by a processor, the foregoing method is implemented.

Compared with the prior art, the technical solution provided in the embodiment of the present disclosure has at least the following advantages:

Embodiments of the present disclosure provide a method for video processing, including: in response to a preset trigger operation on a first playback page of a first video, obtaining a related recommended video stream of the first video, and jumping from the first playback page to a second playback page of the first video; then, in response to a preset first direction slide operation on the second playback page, pulling up from bottom of the second playback page and presenting a first target recommended video in the related recommended video stream. It can be seen that the embodiments of the present disclosure can jumps from the first playback page of the first video to the second playback page, and triggers presentation of the recommended video in the relevant recommended video stream based on the preset first direction slide operation on the second playback page, which is convenient for a user to quickly and efficiently browse a relevant recommended video on a playback page of a first video, thereby enriching video-based interaction functions, and improving video playback experience of a user.

### BRIEF DESCRIPTION OF THE DRAWINGS

The accompanying drawings, which are incorporated herein and form a part of the description, illustrate embodiments consistent with the present disclosure and together with the description and used to explain the principles of the disclosure.

To describe the technical solutions in the embodiments of the present disclosure or in the prior art more clearly, the following briefly introduces the accompanying drawings required for describing the embodiments or the prior art. Apparently, those skilled in the art may still derive other drawings from these accompanying drawings without creative efforts.
Fig. 1 is a flowchart of a method for video processing according to an embodiment of the present disclosure;
Fig. 2 is a schematic diagram of a first playback page according to an embodiment of the present disclosure;
Fig. 3 is a schematic diagram of a second playback page according to an embodiment of the present disclosure;
Fig. 4 is a schematic diagram of another second playback page according to an embodiment of the present disclosure;
Fig. 5 is a schematic diagram of a third playback page according to an embodiment of the present disclosure;
Fig. 6 is a schematic structural diagram of an apparatus for video processing according to an embodiment of the present disclosure;
Fig. 7 is a schematic structural diagram of a device for video processing according to an embodiment of the present disclosure.

### DETAILED DESCRIPTION

In order to more clearly understand the described objects, features and advantages of the present disclosure, the solutions of the present disclosure will be further described below. It should be noted that the embodiments of the present disclosure and the features of the embodiments can be combined with each other without conflict.

In the following description, numerous specific details are set forth in order to provide a thorough understanding of the present disclosure, but the present disclosure may also be implemented with implementations other than those as described herein. Apparently, the embodiments in the description are only a part of embodiments of the present disclosure rather than all of the embodiments.

With continuous development of video processing technologies, people have more and more diversified video-related function requirements; therefore, how to enrich video-related functions and satisfy more requirements of users thereby improving the user experience is a technical problem to be solved urgently at present.

To this end, the present disclosure provides a method for video processing. First, in response to a preset trigger operation on a first playback page of a first video, a related recommended video stream of the first video is obtained, and it is jumped from the first playback page to a second playback page of the first video. Then, in response to a preset first direction slide operation on the second playback page, the first target recommended video in the related recommended video stream is pulled up from the bottom of the second playback page and presented. It can be seen that the embodiments of the present disclosure can jumps from the first playback page of the first video to the second playback page, and triggers presentation of the recommended video in the relevant recommended video stream based on the preset first direction slide operation on the second playback page, which is convenient for a user to quickly and efficiently browse a relevant recommended video on a playback page of a first video, thereby enriching video-based interaction functions, and improving video playback experience of a user.

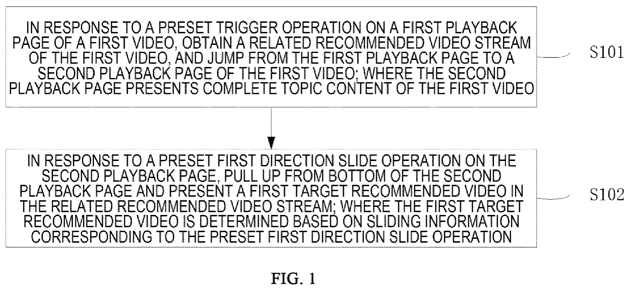

Based on this, an embodiment of the present disclosure provides a method for video processing. Fig. 1 is a flowchart of a method for video processing according to an embodiment of the present disclosure. The method includes:
At S101, in response to a preset trigger operation on a first playback page of a first video, a related recommended video stream of the first video is obtained, and it is jumped from the first playback page to a second playback page of the first video.

In some embodiments, a complete topic content of the first video is presented on the second playback page.

The method for video processing provided in the embodiment of the present disclosure may be applied to a client. For example, the client may include a client deployed in a smartphone, a client deployed in a tablet computer, and the like.

In the embodiment of the present disclosure, the first video may be any video, and specifically, the first video may be any video in any video stream.

In an embodiment of the present disclosure, a preset trigger operation on the first playback page of the first video may include a trigger operation acting in a preset trigger area on the first playback page, such as a click operation, a slide operation, and a long-press operation. In some embodiments, the preset trigger area on the first playback page may include a title area of the first video, and therefore, the trigger operation acting in the preset trigger area on the first playback page may be, for example, a click operation acting in the title area.

In the embodiment of the present disclosure, the related recommended video stream of the first video may include a preset number of recommended videos determined based on the label content of the first video. For example, if the topic of the first video is "pet cat", the related recommended video stream may include a preset number of recommended videos with label content of "pet cat".

In an optional implementation, the recommended video stream related to the first video can further include a preset number of hot videos that are related to the first video. For example, assuming that the video content of the first video is a tourist video, the recommended videos in the related recommended video stream may include a preset number of tourist-related videos with relatively high playback popularity in a preset time period.

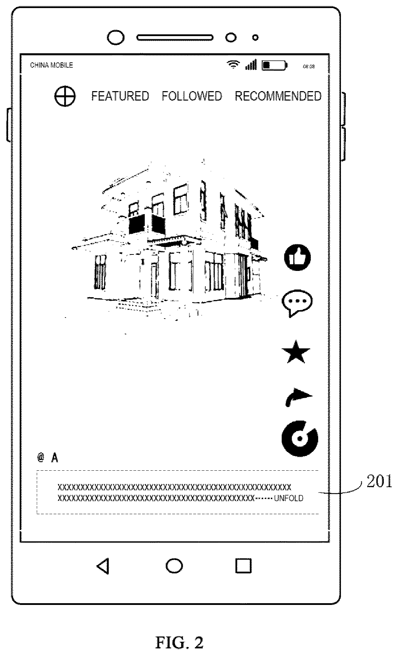

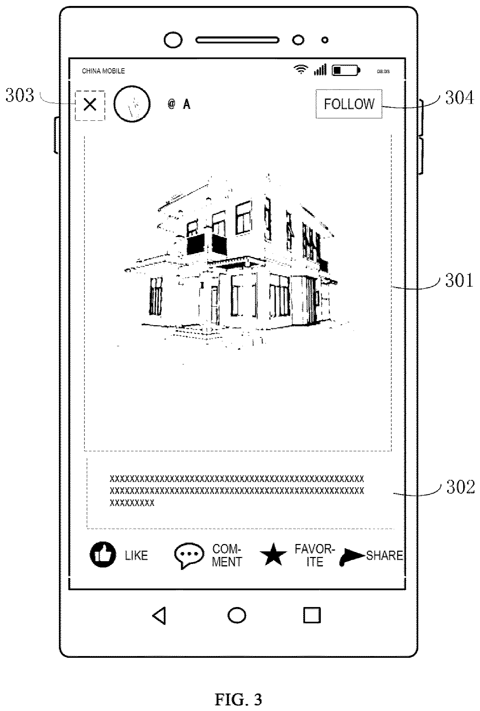

As shown in Fig. 2, which is a schematic diagram of a first playback page according to an embodiment of the present disclosure, when a click operation acting in a title area 201 on the first playback page is received, a related recommended video stream of a first video is obtained, and it is jumped from the first playback page shown in Fig. 2 to a second playback page of the first video. Fig. 3 is a schematic diagram of a second playback page according to an embodiment of the present disclosure, where complete topic information 302 of a first video and a playback window 301 are displayed on the second playback page.

S102: in response to a preset first direction slide operation on the second playback page, a first target recommended video in the related recommended video stream is pulled up from the bottom of the second playback page and presented.

In some embodiments, the first target recommended video is determined based on sliding information corresponding to the preset first direction slide operation.

In the embodiment of the present disclosure, the preset first direction slide operation on the second playback page may include an upward slide operation on the second playback page, etc., for achieving the effect of pulling up from the bottom of the second playback page and presenting the first target recommended video in the related recommended video stream.

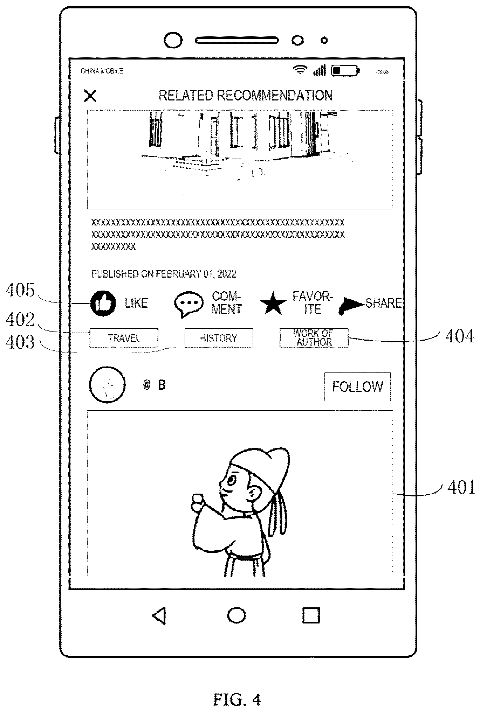

For example, as shown in Fig. 3, when the upward slide operation on the second playback page is received, the first target recommended video in the related recommended video stream is pulled up from the bottom of the second playback page and presented. Fig. 4 is a schematic diagram of displaying another second playback page according to an embodiment of the present disclosure, where a first target recommended video 401 is presented on the second playback page.

In the embodiment of the present disclosure, the first target recommended video may be determined based on sliding information corresponding to the preset first direction slide operation. In some embodiments, the sliding information corresponding to the preset first direction slide operation may include at least one of a sliding distance and a sliding speed.

Specifically, when a preset first direction slide operation on the second playback page is received, sliding information corresponding to the preset first direction slide operation is first obtained; then, a first target recommended video is determined from the related recommended video streams based on the sliding information, and the first target recommended video is pulled up from the bottom of the second playback page and presented.

In an optional implementation, when a preset first direction slide operation on the second playback page is received, a first target recommended video may be determined from the relevant recommended video stream of the first video based on a sliding distance of the preset first direction slide operation, and the bottom of the second playback page is pulled up and the first target recommended video is presented.

Specifically, the larger the sliding distance of the preset first-direction slide operation is, the later the determined sequential position of the first target recommended video in the related recommended video stream is. Assuming that the related recommended video streams of the first video include recommended videos A, B, C, and D, and the sliding distance of the preset first-direction slide operation is small, the first recommended video in the related recommended video stream (that is, the recommended video A) may be determined as the first target recommended video, and the recommended video A may be pulled up from the bottom of the second playback page and presented. Assuming that the sliding distance of the preset first direction slide operation is larger, the third recommended video in the related recommended video stream, that is, the recommended video C, may be determined as the first target recommended video based on the sliding distance, and the recommended video C may be pulled up from the bottom of the second playback page and presented. Correspondingly, the recommended videos A and B in the related recommended video stream are not triggered to play based on the slide operation in the preset first direction, but the covers of the recommended videos A and B are only displayed briefly.

In an optional implementation, when a preset first direction slide operation on the second playback page is received, the first target recommended video may also be determined from the recommended videos A, B, C, and D in the related recommended video streams of the first video based on a sliding speed of the preset first direction slide operation.

Specifically, the larger the sliding speed of the preset first direction slide operation is, the later the determined sequential position of the first target recommended video in the related recommended video stream is. Assuming that the sliding speed of the preset first direction slide operation is relatively small, the first recommended video in the related recommended video stream, that is, the recommended video A, may be determined as the first target recommended video, and the recommended video A is pulled up from the bottom of the second playback page and presented. Assuming that the sliding speed of the preset first direction slide operation is higher, the fourth recommended video in the related recommended video stream, that is, the recommended video D, may be determined as the first target recommended video, and the recommended video D may be pulled up from the bottom of the second playback page and presented. Correspondingly, the recommended videos A, B, and C in the related recommended video streams are not triggered to play based on the foregoing preset first direction slide operation, but the covers of the recommended videos A and B are only displayed briefly.

In another optional implementation, when the preset first direction slide operation on the second playback page is received, the first target recommended video may also be determined from the related recommended video stream of the first video based on the preset sliding speed and the preset sliding distance of the first direction slide operation. A specific determining manner may be understood with reference to the foregoing description, and is not repeatedly described herein.

In practice, the recommended video in the relevant recommended video stream may be presented in a form of a long page. For example, the video being presented on the second playback page shown in Fig. 4 is the first target recommended video in the related recommended video stream, such as the recommended video B. When receiving an upward slide operation on the second playback page, another recommended videos in the related recommended video stream, such as the recommended video C, is presented by sliding upward from the bottom of the second playback page in the form of a long page.

In the embodiments of the present disclosure, during the process of playing the recommended video in the related recommended video stream, if the user wants to exit the second playback page, it may be jumped from the second playback page to the first playback page by a preset return operation on the second playback page, and the first video is played on the first playback page.

In an optional implementation, as shown in Fig. 3, a return control 303 may be provided on the second playback page. Correspondingly, the preset return operation on the second playback page may include a click operation on the return control 303, so as to implement a function of jumping from the second playback page to the first playback page.

In a method for video processing provided in an embodiment of the present disclosure, firstly, in response to a preset trigger operation on a first playback page of a first video, a related recommended video stream of the first video is obtained, and it is jumped from the first playback page to a second playback page of the first video. Then, in response to a preset first direction slide operation on the second playback page, the first target recommended video in the related recommended video stream is pulled up from the bottom of the second playback page and presented. It can be seen that the embodiments of the present disclosure can jumps from the first playback page of the first video to the second playback page, and triggers presentation of the recommended video in the relevant recommended video stream based on the preset first direction slide operation on the second playback page, which is convenient for a user to quickly and efficiently browse a relevant recommended video on a playback page of a first video, thereby enriching video-based interaction functions, and improving video playback experience of a user.

In an actual application, in a process of presenting the recommended video in the related recommended video stream on the second playback page, a presentation effect of the second target recommended video in the recommended video may also be achieved through a preset second direction slide operation on the second playback page.

Specifically, in response to a preset second direction slide operation on the second playback page, based on sliding information corresponding to the preset second direction slide operation, a second target recommended video is determined from recommended videos that are in a relevant recommended video stream and are previous to the currently played recommended video, and the second target recommended video is presented.

In the embodiment of the present disclosure, the preset second direction slide operation on the second playback page may include an operation opposite to the slide direction of the preset first direction slide operation, for example, a downward slide operation.

In the embodiment of the present disclosure, the sliding information corresponding to the preset second direction slide operation may include at least one of a sliding distance and a sliding speed.

For example, it is assumed that the related recommended video stream of the first video consists of a recommended video A, a recommended video B, a recommended video C, and a recommended video D, and the video currently being presented on the second playback page is the recommended video D. When a downward slide operation on the second playback page is received, a second target recommended video is determined from the recommended video A, the recommended video B, and the recommended video C based on sliding information corresponding to the downward slide operation, for example, the recommended video B is determined as the second target recommended video and the recommended video B is presented on the second playback page.

In an optional implementation, assuming that a video currently being presented on the second playback page is a first video, when the preset second direction slide operation on the second playback page is received, it is returned to the first playback page of the first video from the second playback page, and the first video is played on the first playback page.

In a practical application, in order to further enrich a video-based interaction function and improve the video playback experience of a user, a trigger operation for a third target recommended video presented on the second playback page may also be received, the second playback page is jumped to a third playback page, and the third target recommended video is played on the third playback page based on a relevant recommended video stream.

In the embodiment of the present disclosure, the third target recommended video may be any one of the recommended videos in the related recommended video stream. The trigger operation for the third target recommended video may include a click operation on a playback window of the third target recommended video, etc., which is used for achieving the function of jumping from the second playback page to the third playback page.

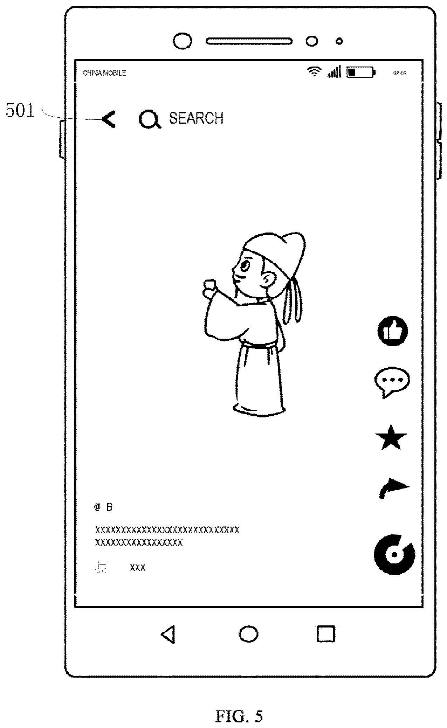

For example, as shown in Fig. 4, when the trigger operation for the third target recommended video 401 presented on the second playback page is received, it is jumped from the second playback page shown in Fig. 4 to a third playback page shown in Fig. 5. Fig. 5 is a schematic diagram of displaying a third playback page according to an embodiment of the present disclosure, a third target recommended video is played on the third playback page based on the relevant recommended video stream.

In an optional implementation, in a process of presenting a recommended video on a third playback page based on a related recommended video stream, a user may also switch the playback of the recommended videos on the third playback page by means of a preset video switching operation, thereby further enriching video-based interaction functions and improving the video playback experience of the user.

Specifically, when a preset video switching operation on the third playback page is received, firstly, a target switching recommended video is determined based on the related recommended video stream, and then the target switching recommended video is played on the third playback page.

In the embodiment of the present disclosure, the preset video switching operation on the third playback page may include an upward slide operation, a downward slide operation, and the like acting on the third playback page, which is used to implement a function of switching playback of the recommended video.

In one embodiment of the present disclosure, when a preset video switching operation on a third playback page is received, firstly, a target switching recommended video corresponding to the recommended video currently being presented is determined based on a relevant recommended video stream, that is, based on an upward slide operation or downward slide operation triggered by the user, a previous video or a next video adjacent to the recommended video currently being presented in the related recommended video stream is determined as the target switching recommended video. Then, on the third playback page, the target switching recommended video is switched to play from the recommended video being currently displayed.

In an optional implementation, when a preset video switching operation on the third playback page is received, if it is determined that the video currently being played is the last recommended video in the related recommended video stream, the user may be prompted that no more recommended videos exist, and the user is prompted to return to the second playback page.

In the embodiment of the present disclosure, during the process of playing the recommended video in the related recommended video stream, if the user wants to exit the third playback page, the third playback page is jumped to the second playback page by a preset return operation on the third playback page, and the first video is played on the second playback page.

In the embodiment of the present disclosure, the preset return operation on the third playback page may include a leftward slide operation or the like acting on the third playback page. In addition, a preset return control may be presented at a preset top position on the third playback page, and correspondingly, the preset return operation on the third playback page may include a click operation on the preset return control.

In an optional implementation, in order to ensure a video viewing experience of a user, upon receiving the preset return operation on the third playback page, a video being played on the third playback page may be determined as a target return recommended video, the third playback page is jumped to a second playback page, and on the second playback page, the target return recommended video is synchronously played based on a related recommended video stream.

For example, as shown in Fig. 5, in the process of playing the recommended video on the third playback page, the target switching recommended video is switched to be played from the currently played recommended video through a preset video switching operation on the third playback page. In the process of playing the target switching recommended video on the third playback page, the target switching recommended video may also be determined as the target return recommended video through a trigger operation for the preset return control 501, and then the third playback page shown in Fig. 5 is jumped to the second playback page shown in Fig. 4, and the target return recommended video is synchronously played on the second playback page based on the related recommended video stream.

In an implementation of the present disclosure, based on the related recommended video stream of the first video, a function of switching playback of respective recommended videos in the related recommended video stream may be implemented on the third playback page. In addition, in the embodiments of the present disclosure, the video being played on the third playback page may be determined as the target return recommended video by a preset return operation on the third playback page, it is jumped from the third playback page to the second playback page, and the target return recommended video is synchronously played based on the related recommended video stream. This further enriches the interaction function based on the video, and improves the user experience.

In a practical application, in order to further enrich a video-based interaction function and improve a video viewing experience of a user, at least one recommendation control corresponding to the first video may be provided on a second playback page. In some embodiments, the recommendation control have a correspondence relationship with the recommendation dimensions corresponding to the first video, thereby facilitating a user in playing recommended videos of different dimensions based on the recommendation control.

In the embodiments of the present disclosure, the recommended dimension corresponding to the first video may include at least one of a content label dimension of the first video and a publisher dimension of the first video. In some embodiments, the content label dimension of the first video may correspond to a plurality of content labels, each content label corresponding to a recommendation control, i.e., the content label dimension of the first video corresponds to a plurality of recommendation controls. For example, assuming that the content label of the first video includes "travel" and "history", the recommendation controls corresponding to the content label dimension of the first video include a "travel" recommendation control and a "history" recommendation control.

In an optional implementation, the related recommended video stream of the first video is updated to the related recommended video stream corresponding to the target recommendation control after receiving a trigger operation for the target recommendation control in the at least one recommendation control.

In the embodiment of the present disclosure, the target recommendation control may be any recommendation control, and the recommended video corresponding to the target recommendation control may be determined based on the recommended dimension corresponding to the target recommendation control. For example, assuming that the recommended dimension corresponding to the target recommendation control is the publisher dimension, other videos published by the author of the first video may be determined as the related recommended video stream corresponding to the target recommendation control.

In the embodiment of the present disclosure, the trigger operation for the target recommendation control in the at least one recommendation control may include a click operation for the target recommendation control.

For example, as shown in Fig. 4, a "travel" recommendation control 402, a "history" recommendation control 403 and a "work of author" recommendation control 404 corresponding to the first video are provided on the second playback page, upon receiving a trigger operation for the "work of author " recommendation control 404, the "author production" recommendation control 404 is determined as a target recommendation control, and the related recommended video stream corresponding to the first video is updated to be the related recommended video stream corresponding to the target recommendation control. The related recommended video stream corresponding to the target recommendation control is determined based on the publisher dimension of the first video, that is, other videos published by the author of the first video.

In an optional implementation, after the related recommended video stream of the first video is updated to the related recommended video stream corresponding to the target recommendation control, based on the updated related recommended video stream, a function of switching to play each recommended video in the updated related recommended video stream may be implemented on the third playback page. For a specific implementation process, reference may be made to the content about switching to play based on the related recommended video stream of the first video in the foregoing embodiment, and details are not described herein again.

In an optional implementation, as shown in Fig. 3, a user avatar and a user nickname corresponding to the publisher of a first video may be presented on a second playback page, so that a current user can conveniently know the publisher of the first video.

In another optional implementation, when a preset interaction trigger operation with respect to the publisher of the first video on the second playback page is received, the preset interaction relationship between the current user and the publisher of the first video is established quickly.

In the embodiments of the present disclosure, the preset interaction relationship between the first user and the publisher of the first video may include determining the publisher of the first video as the object followed by the current user.

For example, as shown in Fig. 3, when a trigger operation for an interaction control 304 corresponding to the publisher of a first video on a second playback page is received, the publisher of the first video is determined as an object followed by the current user, thereby implementing a function of rapidly establishing, on the second playback page, a preset interactive relationship between the publisher of the first video and the current user.

In the embodiments of the present disclosure, at least one recommendation control corresponding to the first video is provided on a second playback page, and a function of updating a related recommended video stream of the first video is realized by means of a trigger operation on a target recommendation control in the at least one recommendation control, thereby further enriching a video-based interaction function and improving video playing experience of a user.

In an optional implementation, when a first video and a recommended video in a related recommended video stream is presented on a second playback page, a preset interaction control corresponding to the first video and a preset interaction control corresponding to the recommended video in the related recommended video stream may also be displayed, and when a trigger operation on the preset interaction control is received, the number of interaction corresponding to the preset interaction control is increased. In some embodiments, the preset interaction control may be a control for triggering an interaction operation. For example, the preset interaction control may include a like control, a comment control, a favorite control, a share control, and the like.

The preset interaction control has a specific interaction function, for example, the like control has a like function for a currently presented video. Therefore, in the embodiment of the present disclosure, when the trigger operation for the preset interaction control on the second playback page is received, the number of interactions corresponding to the preset interaction control may be increased.

For example, as shown in Fig. 4, when the trigger operation on the preset interaction control 405 of the second playback page is received, the number of likes of the first video is increased, for example, the number of likes is increased by one on the basis of the original number of likes.

Likewise, when the recommended video in the related recommended video stream is presented on the second playback page, the number of interaction corresponding to the preset interaction control is also increased by the trigger operation on the preset interaction control corresponding to the recommended video. The specific display effect may be understood with reference to the foregoing display effect of the first video, and will not be further described herein.

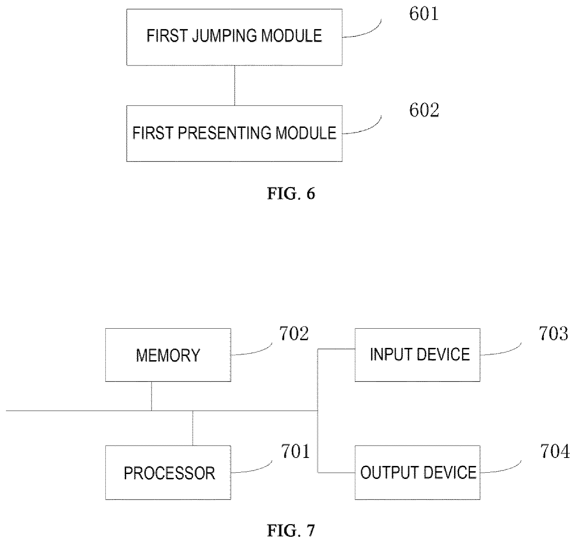

Based on the foregoing method embodiments, the present disclosure further provides an apparatus for video processing. Fig. 6 is a schematic structural diagram of an apparatus for video processing according to an embodiment of the present disclosure. The apparatus for video processing includes:

a first jumping module 601 configured to obtain, in response to a preset trigger operation on a first playback page of a first video, a related recommended video stream of the first video, and jump from the first playback page to a second playback page of the first video; wherein the second playback page presents complete topic content of the first video; and

a first presenting module 602 configured to pull up from bottom of the second playback page and present a first target recommended video in the related recommended video stream, in response to a preset first direction slide operation on the second playback page; wherein the first target recommended video is determined based on sliding information corresponding to the preset first direction slide operation.

In an optional implementation, the apparatus further includes:
a second presenting module configured to determine, based on sliding information corresponding to the preset second direction slide operation, a second target recommended video from recommended videos in the related recommended video stream previous to a currently played recommended video, and present the second target recommended video, in response to a preset second direction slide operation on the second playback page,.

In an optional implementation, the apparatus further includes:
a first playback module configured to jump from the second playback page to a third playback page in response to a trigger operation for a third target recommended video presented on the second playback page, and play the third target recommended video on the third playback page based on the related recommended video stream.

In an optional implementation, the apparatus further includes:
a second playback module configured to determine a target switching recommended video based on the related recommended video stream in response to a preset video switching operation on the third playback page, and play the target switching recommended video on the third playback page.

In an optional implementation, the apparatus further includes:
a second jumping module configured to determine, in response to a preset return operation on the third playback page, a video being played on the third playback page as a target return recommended video, and jump from the third playback page to the second playback page; and
a third playback module configured to synchronously play the target return recommended video on the second playback page based on the related recommended video stream.

In an optional implementation, at least one recommendation control corresponding to the first video is provided on the second playback page, and there is a correspondence between the recommendation control and a recommendation dimension corresponding to the first video. The apparatus further includes:
an updating module configured to update, in response to a trigger operation for a target recommendation control in the at least one recommendation control, the related recommended video stream of the first video to be a related recommended video stream of the target recommendation control; where the related recommended video stream of the target recommendation control is determined based on a recommendation dimension corresponding to the target recommendation control.

In an optional implementation, the recommended dimension corresponding to the first video includes a content label dimension of the first video and/or a publisher dimension of the first video.

In an optional implementation, the sliding information includes at least one of a sliding speed and a sliding distance, and the first presenting module includes:
an obtaining submodule configured to obtain, in response to a preset first direction slide operation on the second playback page, sliding information corresponding to the preset first direction slide operation;
a determining submodule configured to determine the first target recommended video from the related recommended video stream based on the sliding information, and pull up from the bottom of the second playback page and presenting the first target recommended video.

In the apparatus for video processing provided in the embodiment of the present disclosure. First, in response to a preset trigger operation on a first playback page of a first video, a related recommended video stream of the first video is obtained, and it is jumped from the first playback page to a second playback page of the first video. Then, in response to a preset first direction slide operation on the second playback page, the first target recommended video in the related recommended video stream is pulled up from the bottom of the second playback page and presented. It can be seen that the embodiments of the present disclosure can jumps from the first playback page of the first video to the second playback page, and triggers presentation of the recommended video in the relevant recommended video stream based on the preset first direction slide operation on the second playback page, which is convenient for a user to quickly and efficiently browse a relevant recommended video on a playback page of a first video, thereby enriching video-based interaction functions, and improving video playback experience of a user.

In addition to the described method and apparatus, the embodiments of the present disclosure further provide a computer-readable storage medium. The computer-readable storage medium stores instructions therein, and when the instructions run on a terminal device, the terminal device is enabled to implement the method for video processing of the embodiments of the present disclosure.

An embodiment of the present disclosure further provides a computer program product. The computer program product includes a computer program or instructions. When the computer program or instruction are executed by a processor, the method for video processing according to the embodiment of the present disclosure is implemented.

In addition, an embodiment of the present disclosure further provides a device for video processing. Referring to Fig. 7, the device for video processing may include:
a processor 701, a memory 702, an input device 703, and an output device 704, where the number of processors 701 in the device for video processing may be one or more, and one processor is used as an example in Fig. 7. In some embodiments of the present disclosure, the processor 701, the memory 702, the input device 703, and the output device 704 may be connected by using a bus or in another manner, a case where the input device 703, and the output device 704 is connected using the bus connection is used as an example in Fig. 7.

The memory 702 may be configured to store a software program and a module, and the processor 701 executes various functional applications and data processing of the device for video processing by running the software program and the module stored in the memory 702. The memory 702 may mainly include a program storage area and a data storage area, where the program storage area may store an operating system, an application program required by at least one function, and the like. In addition, the memory 702 may include a high-speed random-access memory, and can further include a non-volatile memory, for example, at least one magnetic disk storage device, a flash memory device, or another volatile solid-state storage device. The input device 703 may be adapted to receive input digital information or character information and generate signal inputs related to user settings and function controls of the device for video processing.

Specifically, in this embodiment, the processor 701 may load, according to the following instruction, an executable file corresponding to the process of one or more application programs into the memory 702, and the processor 701 runs the application programs stored in the memory 702, thereby implementing various functions of the foregoing device for video processing.

It should be noted that, in this specification, relationship terms such as "first" and "second" are merely used to distinguish one entity or operation from another entity or operation, and it does not necessarily require or imply any actual relationship or sequence between these entities or operations. Furthermore, the terms "include", "comprise", or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by "comprising a... " does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but will be subject to the broadest scope consistent with the principles and novel features disclosed herein.

## Claims

1. A method for video processing, comprising:
in response to a preset trigger operation on a first playback page of a first video, obtaining a related recommended video stream of the first video, and jumping from the first playback page to a second playback page of the first video, wherein the second playback page presents complete topic content of the first video; and
in response to a preset first direction slide operation on the second playback page, pulling up from bottom of the second playback page and presenting a first target recommended video in the related recommended video stream, wherein the first target recommended video is determined based on sliding information corresponding to the preset first direction slide operation.

2. The method of claim 1, further comprising:
in response to a preset second direction slide operation on the second playback page, determining, based on sliding information corresponding to the preset second direction slide operation, a second target recommended video from recommended videos in the related recommended video stream previous to a currently played recommended video, and presenting the second target recommended video.

3. The method of claim 1 or 2, further comprising:
in response to a trigger operation for a third target recommended video presented on the second playback page, jumping from the second playback page to a third playback page, and playing the third target recommended video on the third playback page based on the related recommended video stream.

4. The method of claim 3, further comprising:
in response to a preset video switching operation on the third playback page, determining a target switching recommended video based on the related recommended video stream, and playing the target switching recommended video on the third playback page.

5. The method of claim 3, further comprising:
in response to a preset return operation on the third playback page, determining a video being played on the third playback page as a target return recommended video, and jumping from the third playback page to the second playback page; and
synchronously playing the target return recommended video on the second playback page based on the related recommended video stream.

6. The method of claim 1, wherein at least one recommendation control corresponding to the first video is provided on the second playback page, and there is a correspondence between the recommendation control and a recommendation dimension corresponding to the first video, and the method further comprises:
in response to a trigger operation for a target recommendation control in the at least one recommendation control, updating the related recommended video stream of the first video to be a related recommended video stream of the target recommendation control; wherein the related recommended video stream of the target recommendation control is determined based on a recommendation dimension corresponding to the target recommendation control.

7. The method of claim 6, wherein the recommended dimension corresponding to the first video comprises a content label dimension of the first video and/or a publisher dimension of the first video.

8. The method of claim 1, wherein the sliding information comprises at least one of a sliding speed and a sliding distance, and pulling up from the bottom of the second playback page and presenting a first target recommended video in the related recommended video stream in response to a preset first direction slide operation on the second playback page comprises:
in response to a preset first direction slide operation on the second playback page, obtaining sliding information corresponding to the preset first direction slide operation; and
determining the first target recommended video from the related recommended video stream based on the sliding information, and pulling up from the bottom of the second playback page and presenting the first target recommended video.

9. An apparatus for video processing, comprising:
a first jumping module configured to, in response to a preset trigger operation on a first playback page of a first video, obtain a related recommended video stream of the first video, and jump from the first playback page to a second playback page of the first video, wherein the second playback page presents complete topic content of the first video; and
a first presenting module configured to, in response to a preset first direction slide operation on the second playback page, pull up from bottom of the second playback page and present a first target recommended video in the related recommended video stream, wherein the first target recommended video is determined based on sliding information corresponding to the preset first direction slide operation.

10. A computer readable storage medium, wherein the computer readable storage medium stores instructions therein, and when running on a terminal device, the instruction causes the terminal device to implement the method according to any of claims 1 to 8.

11. A device for video processing, comprising: a memory, a processor, and a computer program stored on the memory and runnable on the processor, wherein when executing the computer program, the processor implements the method according to any of claims 1 to 8.
